# EUROPEAN PATENT APPLICATION

(11) **EP 3 883 076 A1**
(43) Date of publication of application: **22.09.2021**
(21) Application number: 18937388.9
(22) Date of filing: 12.11.2018
(51) Int. Cl.: H02G 11/02, B65H 75/44

(54) **REEL DEVICE FOR CHARGING CABLE**

(30) Priority: 17.10.2018 KR 20180123697
(71) Applicant: Joong Ang Control Co., Ltd., Cheongju-si, Chungcheongbuk-do 28443 (KR)
(72) Inventor: SHIN, Hyeon Kyun, Goyang-si Gyeonggi-do 10415 (KR)
(74) Representative: Samson & Partner Patentanwälte mbB
(86) International application number: PCT/KR2018/013678
(87) International publication number: WO 2020/080587

(57) **Abstract**

The present invention relates to a cable reel device for charging an electric vehicle, wherein the reel device is installed in the upper part of a vehicle to be charged and is designed such that a charging gun and a charging cable can easily move down from above and be positioned in a charging inlet of the vehicle. A charging cable that is thick and heavy may be easily controlled by using the reel device for the charging cable according to the present invention, and moreover a cross-sectional area of the cable may be enlarged. Accordingly, small line resistance, and low heat generation and small line loss due to the small line resistance may be expected and improved charging efficiency may be obtained.

## Description

### CROSS-REFERENCE TO RELATED APPLICATION

This application claims the benefit of Korean Patent Application No. 10-2018-0123697, filed on October 17, 2018, in the Korean Intellectual Property Office, the disclosure of which is incorporated herein in its entirety by reference.

### BACKGROUND

### 1) FIELD

The present disclosure relates to a reel device for a charging cable and, more particularly, to a reel device for a charging cable used in a rapid charger of an electric vehicle, which is installed above a vehicle to be charged, withdraws the charging cable, and enables a charging gun to be easily positioned at a charging point.

### 2) DESCRIPTION OF RELATED ART

The statements in this section merely provide background information related to the present disclosure and do not necessarily constitute prior art. An allowable current of a charging cable used in a rapid charger of an electric vehicle is high enough to reach 100 A to several hundred amperes. Also, a very thick cable and a heavy charging plug are required to secure heat generation caused by the high current and insulation, and an operation is not convenient. An allowable current of a charging cable used in a rapid charger of an electric vehicle is high enough to reach 100 A to several hundred amperes. Also, a very thick cable and a heavy charging plug are required to secure heat generation caused by the high current and insulation, and an operation is not convenient.

In order to store the cable, the cable is generally wound around a reel rotated inside a cable winding tub. In the case of a thick cable, flexibility is reduced, and thus a diameter of the cable reel should be very large so that smooth storage can be achieved. In particular, in a form in which the inner reel is rotated to wind the cable on a circumference thereof, the diameter of the reel is further and further increased because an outer diameter of the inner reel should be set in consideration of a flexibility limit of the cable.

As an alternative to this, as in Patent Document 1, instead of increasing a cross-sectional area of the cable, cooling water may be made to flow into the cable. However, in this method, a cooling water pump is additionally required, and a risk of cooling water leakage cannot be eliminated.

On the other hand, a technique for increasing an outer diameter of an outer circumferential surface of a winding part by separating a semi-cylindrical reel having a flange in order to reduce unwinding of a charging cable in a wound state while suppressing a winding job from becoming cumbersome is disclosed in Patent Document 2, but the technique has only an effect of preventing the wound cable from being loosened.

### SUMMARY

The present disclosure is to providing an improved type of cable reel structure in which a sufficiently thick cable is used, which facilitates an operation of winding or unwinding the cable and which can prevent the cable from being twisted or disturbed in a repeated cable storage or withdrawal process and from being reduced in operability.

In accordance with one aspect of the present disclosure, provided is a reel device for a charging cable comprising a winding tub which has a cable outlet on one side thereof and in which cables are stored, a plurality of guide portions fixed in the winding tub and disposed in a radial shape, and a plurality of guides coupled to the guide portions so as to be movable along the guide portions, each of the guides being an accommodating portion that accommodates at least some of the cables, wherein an average diameter of the cables wound by the plurality of guides is reduced when the cables are withdrawn, and the average diameter of the cables wound by the plurality of guides is increased when the cables are stored, to withdraw and store the cables.

In some embodiments, the guide may further comprises a plurality of rollers disposed around the accommodating portion so as to guide individual strands of the cable.

In some embodiments, the guide portion is a guide shaft, the guide further includes a slide bush that is slidably coupled to the guide shaft, and the reel device further comprises a compression spring that is inserted into an outer circumferential surface of the guide shaft and is configured to push the guide to an outside of the radial shape.

In some embodiments, the guide portion is a lead screw, the guide further includes a nut that is screwed with the lead screw, and the reel device further comprises a first bevel gear disposed in the center of the radial shape, a second bevel gear coupled to one end of each of the lead screws and engaged with the first bevel gear, and a driving motor section configured to drive the first beveled gear.

In some embodiments, the guide portion is a guideway formed in the winding tub; the guide further includes a guide wheel formed to move along the guideway and the reel device further comprises a coiled leaf spring that is disposed inside the radial shape and is configured to come into contact with at least some of the plurality of rollers to push the guide to an outside of the radial shape.

In some embodiments, a plurality of accommodation portions are arranged along the guide portion.

In some embodiments, a plurality of accommodation portions are arranged in a direction perpendicular to a plane in which the plurality of guides are arranged.

In accordance with another aspect of the present disclosure, provided is a reel device for a charging cable comprising a winding tub which has a cable outlet on one side thereof and is elongated in one direction, and in which a cable is stored, a plurality of guide portions fixed in the winding tub and arranged in the one direction, a plurality of guides having accommodation portions configured to accommodate individual strands of the cable and a second guide fixing frame which is configured to move along the guide portions, to which the plurality of guides are fixed, and which is configured such that one end and the other end of the cable wound by the plurality of guides are placed in the same direction, wherein the second guide fixing frame moves to one side of the winding tub when the cable is withdrawn, and the second guide fixing frame moves to the other side of the winding tub when the cable is stored, to withdraw and store the cable.

In some embodiments, the guide further comprises a plurality of rollers disposed around the accommodation portions so as to guide the individual strands of the cable.

In some embodiments, the guide portion is a guide shaft, the second guide fixing frame further includes slide bushes that are slidably coupled to the guide shaft and the reel device further comprises a compression spring inserted into the guide shaft and configured to push the second guiding fixing frame to the other side.

In some embodiments, the guide portion is a lead screw, the second guide fixing frame further includes a nut screwed with the lead screw and the reel device further comprises a driving motor section disposed on the one side so as to rotate the lead screw.

In some embodiments, the guide portion is a guideway formed in the winding tub in the one direction, the second guide fixing frame further includes a guide wheel configured to move along the guideway and he reel device further comprises wire reel structures, which are configured to pull the second guiding fixing frame to the other side, on the other side.

In some embodiments, a plurality of accommodation portions are arranged in a direction perpendicular to a plane in which the plurality of guides are arranged.

In some embodiments, the reel device for a charging cable further comprising a first guide fixing frame fixed to one side of the winding tube, wherein the first guide fixing frame accommodates the plurality of guides to be fixed so that the cable is transferrable.

In accordance with another aspect of the present disclosure, provided is an electric vehicle charging system comprising the reel device for a charging cable above, a support configured to place the reel devices for a charging cable in an upper space of a vehicle to be charged and a rotation portion configured to rotate the reel device for a charging cable such that the cable outlet is placed at a position close to a charging port of the vehicle.

In some embodiment the electric vehicle charging system further comprising an extension arm structure disposed between the support and the rotation portion and configured to enable a length thereof to be adjusted, the extension arm structure comprises a charging cable that extends from the support and is electrically connected to the cable, and a reel device for an extension arm cable formed at one end to store or withdraw the charging cable in correspondence to a change in the length of the extension arm structure, the reel device for an extension arm cable is formed in the same structure as the reel devices for a charging cable.

### Effect of the Present Invention

The reel device for a charging cable according to the present disclosure, which is installed above a vehicle to be charged and is designed such that a charging gun and the charging cable can be easily lowered from above and positioned at a charging port of the vehicle, is used. Thereby, operability of a thick and heavy charging cable becomes easy, and furthermore, a cable cross-sectional area can be increased so that low line resistance, and low heat generation and a small line loss depending on the low line resistance can be anticipated, and improved charging efficiency can be obtained.

### BRIEF DESCRIPTION OF THE DRAWINGS

FIG. 1 illustrates a concept of various positions of a typical electric vehicle charging port and a concept of a charging cable reel device disposed in an electric vehicle upper space according to one embodiment of the present disclosure.
FIG. 2 illustrates a rotational concept of a cable reel device for charging an electric vehicle according to one embodiment of the present disclosure.
FIG. 3 illustrates an overall configuration of a cable reel device for charging an electric vehicle according to one embodiment of the present disclosure.
FIG. 4 is a plan view illustrating a concept of a guide shaft type reel device according to one embodiment of the present disclosure.
FIG. 5 is a side view illustrating concepts of a guide shaft and a guide of the embodiment illustrated in FIG. 4.
FIG. 6 is a plan view illustrating a concept of a lead screw type reel device according to one embodiment of the present disclosure.
FIG. 7 is a side view illustrating concepts of a lead screw and a guide of the embodiment illustrated in FIG. 6.
FIG. 8 is a conceptual diagram illustrating a power driving part of the embodiment illustrated in FIG. 6.
FIG. 9 is a conceptual diagram illustrating a manual driving part of the embodiment illustrated in FIG. 6.
FIG. 10 is a plan view illustrating a concept of a guideway type reel device according to one embodiment of the present disclosure.
FIG. 11 is a side view illustrating concepts of a coiled leaf spring and a guide of the embodiment illustrated in FIG. 10.
FIG. 12 is a plan view illustrating a concept of a guide shaft type elliptical reel device according to one embodiment of the present disclosure.
FIG. 13 is a plan view illustrating a concept of a lead screw type elliptical reel device according to one embodiment of the present disclosure.
FIG. 14 is a plan view illustrating a concept of a guideway type semi-elliptical reel device according to one embodiment of the present disclosure.

### DETAILED DESCRIPTION

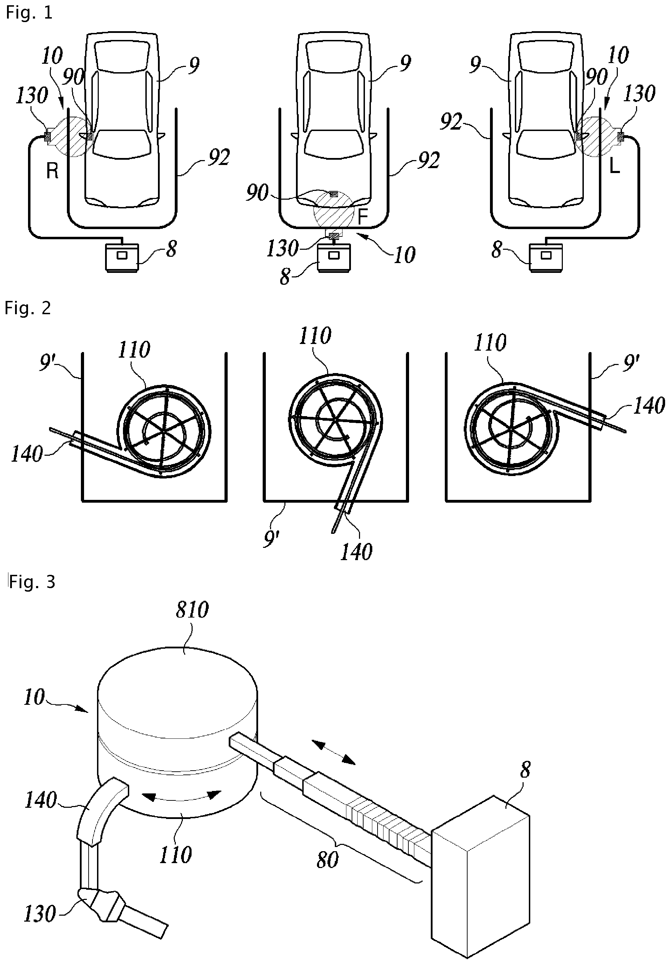

Hereinafter, some embodiments of the present disclosure will be described in detail with reference to the accompanying drawings. In the following description, like reference numerals preferably designate like elements, although the elements are shown in different drawings. Further, in the following description of some embodiments, a detailed description of known functions and configurations incorporated therein will be omitted for the purpose of clarity and for brevity. Additionally, various terms such as first, second, A, B, (a), (b), etc., are used solely to differentiate one component from the other but not to imply or suggest the substances, order, or sequence of the components. Throughout this specification, when a part 'includes' or 'comprises' a component, the part is meant to further include other components, not to exclude thereof unless specifically stated to the contrary. The terms such as 'unit', 'module', and the like refer to one or more units for processing at least one function or operation, which may be implemented by hardware, software, or a combination thereof. FIG. 1 illustrates a concept of various positions of a typical electric vehicle charging port and a concept of a charging cable reel device disposed in an electric vehicle upper space according to one embodiment of the present disclosure.

Referring to FIG. 1, since a position of an electric vehicle charging port 90 is different for each vehicle 9, a charging cable 120 is inserted to extend from a charger 8 to the vehicle charging port 90, and withdrawal and storage of the cable 120 are performed at any time.

A cable reel 10 according to one embodiment of the present disclosure is characterized in that, when the cable 120 is wound, the cable 120 is wound while being filled in an outward direction of a winding tub 110 instead of a general type in which the cable is wound from the center of the winding tub 110, and a guide is installed to help guide the winding of the cable 120 in the winding tub 110. Further, it is characterized in that a force for pulling the cable 120 to the winding tub 110 is applied in correspondence to weight of a portion of the cable 120 that is withdrawn out of the winding trough 110, or the heavy cable 120 can be easily operated by a user by withdrawing and storing the cable 120 using power of, for instance, a motor.

Furthermore, a rail 92 of the type installed above the vehicle 9 for moving the winding tub 110 may be provided between a charger and the winding tub 110 such that the winding tub 110 is installed in an upper space of the vehicle 9 in correspondence to the electric vehicle charging port 90 at various positions and can be positioned at an appropriate position.

FIG. 2 illustrates a rotational concept of a cable reel device for charging an electric vehicle according to one embodiment of the present disclosure.

Referring to FIG. 2, the cable reel device for charging an electric vehicle according to one embodiment is disposed in an upper space of a vehicle 9', is supported by a support, and can be rotated such that a cable outlet 140 is placed at a close position in correspondence to the position of the charging port 90 which is different for each vehicle 9'.

FIG. 3 illustrates an overall configuration of a cable reel device for charging an electric vehicle according to one embodiment of the present disclosure.

Referring to FIG. 3, the winding tubs 110 and 810 may be configured in two upper and lower stages and may be provided with an extension arm structure 80 in which longitudinal extension or retraction is possible and may be configured such that a position of the cable outlet 140 of the winding tub 110 can be rotated and disposed according to the position of the vehicle charging port 90.

For example, an upper winding tub 810 may serve to increase or reduce a length of an inner cable 122 during the longitudinal extension or retraction between the charger 8 and the winding tub 810, and a lower winding tub 110 may serve to extend the charging cable 120, at one end of which the charging gun 130 is provided, to the vehicle charging port 90 or to store the charging cable 120 in the winding tub 110 again.

In this case, the structure of the cable reel device 10 according to one embodiment of the present disclosure may be equally applied to the upper winding tub 810 and the lower winding tub 110 when the cables 120 and 122 are withdrawn and stored.

The cable reel device 10 according to the present disclosure is characterized in that the cable 120 is loosely wound in the winding tub 110 by one turn or two turns or more if necessary, and when the cable 120 is pulled to withdraw the cable 120 for use, the cable 120 is tightly wound while an outer diameter size formed by the cable 120, which has been loosely wound in the winding tub 110, is reduced, and conversely, when the cable 120 is pushed into the winding tube 110, the cable 120 is loosely wound again while an outer diameter size formed by the cable 120, which has been wound in the winding tub 110, is increased. That is, instead of a structure in which the inner reel is rotated to wind the cable 120 as usual, the cable reel device 10 has a structure in which a plurality of guide components arranged to guide the inner cable 120 are moved outward from the center, and thereby an outer diameter size formed by the inner cable 120 wound around the plurality of guide components is increased to store the cable 120.

An inner structure may be configured to provide a force for pulling the exposed outer cable 120 into the winding tub 110 in correspondence to weight of the outer cable 120 which is increased as the outer diameter size formed by the cable 120 wound around the guide 220 is reduced, i.e., as the portion of the cable 120 withdrawn out of the winding tub 110 increases. The inner structure may include a spring or the like, and the force for pulling the cable 120 into the winding tub 110 is applied in a direction in which the outer diameter size formed by the cable 120 is increased. On the other hand, the increase or reduction in the outer diameter formed by the portion of the cable 120 inside the winding tube 110 may be configured such that the cable 120 is withdrawn and stored in an automated way controlled by power of, for instance, a motor.

The reel device 10 for a charging cable according to the present disclosure includes the winding tub 110 which has the cable outlet 140 on one side thereof and in which the cables 120 are stored, a plurality of guide portions 210 that are fixed in the winding tub 110 and are radially arranged, and the guides 220 that have accommodation portions 422 formed to move along the guide portions 210 and accommodate individual strands of the cables 120. Here, the guides 220 are coupled to move along the guide portions 210 and are arranged on a virtual circle on the basis of the center of a shape in which the plurality of guide portions 210 are assembled. This structure is configured such that when the cables 120 are withdrawn, an average diameter of outer diameters formed by the cables 120 wound around the plurality of guides 220 is reduced, and when the cables 120 are stored, the average diameter of the outer diameters formed by the cables 120 wound around the plurality of guides 220 is increased. Thereby, the cables 120 are withdrawn and stored.

The guide 220 further includes a plurality of rollers 424 disposed around the accommodation portions 422 to guide the individual strands of the cables 120 inside the winding tub 110. The rollers 424 are installed to help guide the winding of the cables 120 inside the winding tub 110. The rollers 424 may be installed to surround the accommodation portions 422 provided in guide bodies 426. The individual strands of the cables 120 accommodated in the accommodation portions 422 are brought into contact with the rollers 424, minimize frictional resistance when the cables 120 move through the accommodation portions 422, and facilitate the movement of the cables 120. In the case where the winding tub 110 is arranged horizontally as in one embodiment, the rollers 424 may be installed on left and right sides and lower sides of the cables 120 and support the cables 120.

The cables 120 are preferably formed to have appropriate bending rigidity. If the cables 120 are too soft, the cables 120 may be wound around a reel having a small diameter, but twisting may be easily caused or a pushing operation may be difficult. In addition, if the cables 120 are too stiff, the cables 120 may not be well bent, which makes it difficult for the cables 120 to be appropriately bent and pushed into the winding tub 110.

Various embodiments of the cable reel device 10 according to the present disclosure will be described below.

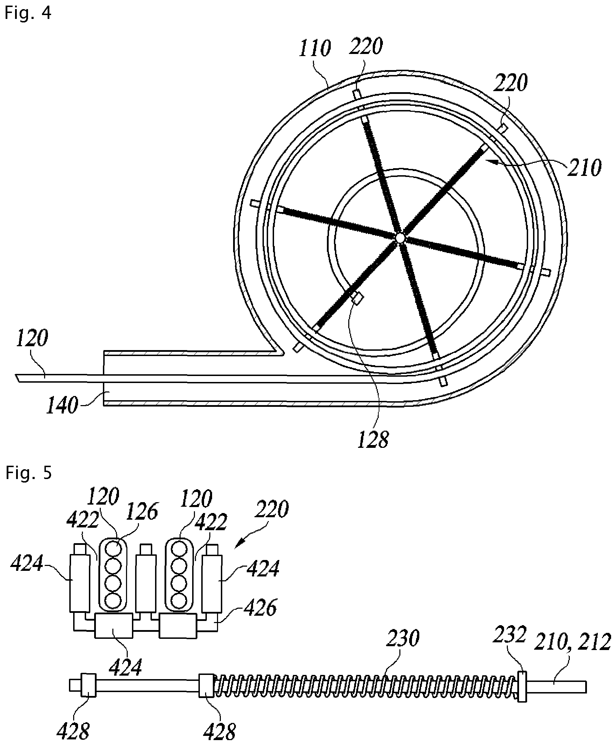

FIG. 4 is a plan view illustrating a concept of a guide shaft type reel device according to one embodiment of the present disclosure.

FIG. 5 is a side view illustrating concepts of a guide shaft and a guide of the embodiment illustrated in FIG. 4.

Referring to FIGS. 4 and 5, the guide portion 210 of the cable reel in one embodiment may be in the form of the guide shaft 212. Further, the guide 220 may further include slide bushes 428 that are slidably coupled to the guide shaft 212 and the reel device may further include a compression spring 230 that is inserted into the guide shaft 212 and is configured to push the guide 220 to the outside of a radial structure formed by a plurality of guide shafts 212. In one embodiment, it is illustrated that six guide shafts 212 are radially disposed, but the number of guide shafts 212 and the number of guides 220 may be appropriately selected if necessary.

In one embodiment, an example in which the guide 220 is configured to accommodate two individual strands of the cable 120 in a longitudinal direction of the guide shaft 212 is illustrated. Those having ordinary skill in the art can design the guide 220 to have an appropriate number of accommodation portions 422 in consideration of the diameter of the winding tub 110 and the length of the withdrawable cable 120.

In addition, in one embodiment, it is assumed that the winding tub 110 is horizontally disposed, and it is described that, for the sake of convenience, three rollers 424 for guiding the individual cables 120 accommodated in the accommodation portions 422 are used to guide the left and right sides, and two rollers 424 are used to guide a lower end of each cable 120. However, two rollers 424 may be additionally disposed at an upper end of each cable 120 if necessary.

The compression spring 230, which is inserted into the guide shaft 212, may be provided with a fixing ring 232 to support one end of the compression spring 230 in the vicinity of the center of the radial structure, and the other end of the compression spring 230 may be installed to push the slide bush 428 included in the guide 220. In consideration of the weight of the cable 120 and the charging gun 130 that are withdrawn and suspended externally, the compression spring 230 may be designed to correspond to the weight, and thereby prevent a user from feeling the weight when the thick and heavy cable 120 is withdrawn and stored.

Referring to FIG. 4, the innermost end of the inner cable 120 may be electrically connected to the charger 8 through a cable inlet 128 of the winding tub 110.

The cable reel according to the present disclosure does not include a rotating component inside the winding tub 110, and has a structure in which the cables 120 are withdrawn to the outside as a circular diameter formed by the plurality of guides for storing the cables 120 decreases. In addition, the circular diameter formed by the plurality of guides is increased by actions of the compression spring in accordance with the weight of the outer cables 120 which is reduced when the cables 120 are stored, and thereby the cables 120 are stored in the winding tub 110. Since the cable reel according to the present disclosure acts in a direction in which the radius of curvature of the cable 120 increases during storage, there is an effect that the outer diameter of the entire winding tub 110 can be set to be smaller than that of the cable 120 wound around a normal rotating inner reel in the case where the cables 120 have the same flexibility or rigidity.

Further, referring to FIG. 5, each cable 120 inside the winding tub 110 is guided by the accommodation portion 422 and the roller 424 provided in the guide 220, and thereby a phenomenon in which the cables 120 are entangled and twisted in the process of storing and withdrawing the cables 120 can be greatly reduced. In addition, the individual cables 120 are supported by the rollers 424, and thereby heat generated from the cables 120 is transferred through a metal or the like so that an effect of cooling the cables 120 can be additionally expected. In addition, the cable 120 illustrated in FIG. 5 is exemplified by a flat type cable 120 in which inner conducting wires 126 are arranged in a row, and this type of cable 120 is expected to have an effect of preventing twisting of the cable 120, as well as an effect of accelerating heat dissipation of the cables 120 by securing a contact area with the roller 424 to the maximum.

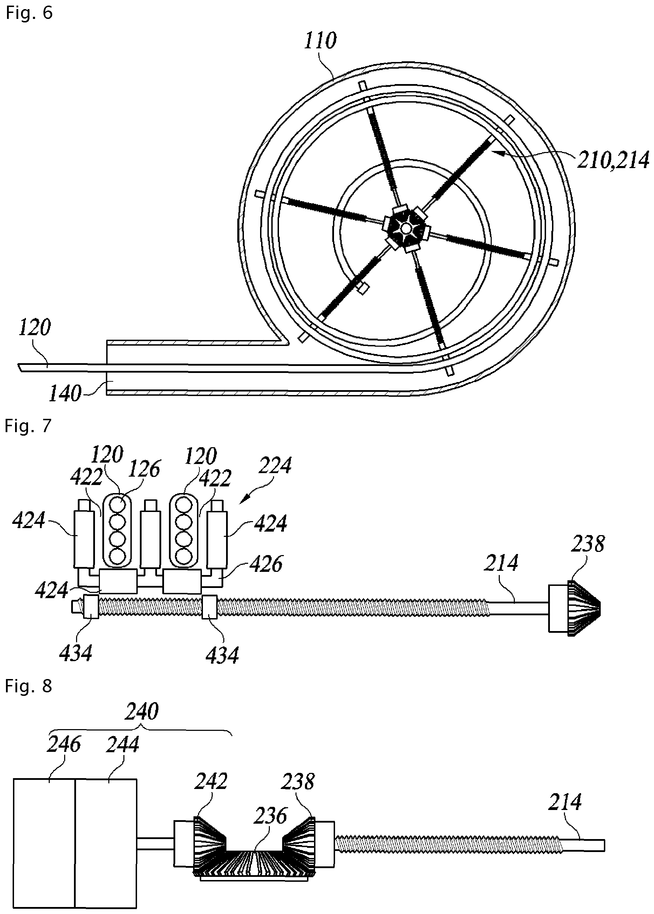

FIG. 6 is a plan view illustrating a concept of a lead screw type reel device according to one embodiment of the present disclosure.

FIG. 7 is a side view illustrating concepts of a lead screw and a guide of the embodiment illustrated in FIG. 6.

FIG. 8 is a conceptual diagram illustrating a power driving part of the embodiment illustrated in FIG. 6.

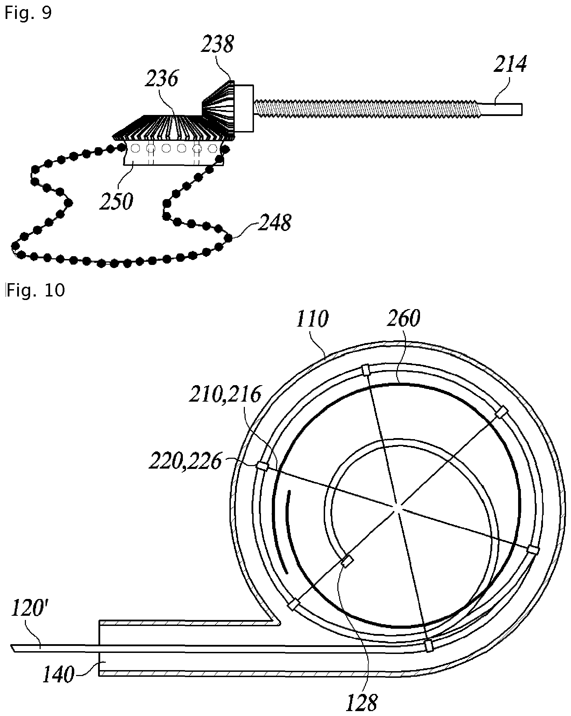

FIG. 9 is a conceptual diagram illustrating a manual driving part of the embodiment illustrated in FIG. 6.

Referring to FIGS. 6 to 9, in one embodiment, the guide portion 210 of the cable reel may be in the form of a lead screw 214. In addition, the guides 220 and 224 may further include a nut 434 screwed with the lead screw 214 and include a first bevel gear 236 disposed in a radial center formed by a plurality of lead screws 214, a second bevel gear 238 coupled to one end of each of the lead screws 214 and engaged with the first bevel gear 236, and a driving motor section 240 configured to drive the first beveled gear 236.

The first bevel gear 236 may be made up of a motor 246, a speed reducer 244, and a third bevel gear 242 engaged with the first bevel gear 236 as illustrated in FIG. 8 such that the cable 120 is automatically withdrawn and stored. If necessary, the first bevel gear 236 may be manually operated by various methods such as a chain 248 or a belt illustrated in FIG. 9 by manually operating a portion of the chain 248 or the belt, which is exposed to the outside, to rotate the first beveled gear 236. For example, like a structure for raising and lowering a window blind, the chain 248 is wound around a drum 250, and when the chain 248 turns the drum 250, the first bevel gear 236 is rotated via, for instance, the speed reducer. Thereby, a diameter formed by the plurality of guides 220 is changed by rotating the lead screws 214, and the cable 20 may be wound or unwound.

In the case of using the motor 246 as illustrated in FIG. 8, the driving motor section 240 including the additional third bevel gear 242 between the radially arranged lead screws 214 may be placed horizontally, which has an advantage that a height of the winding tub 110 can be kept low. Meanwhile, although not separately illustrated, one embodiment in which the driving motor section 240 is installed on a central axis of the first bevel gear 236 side by side may be included.

FIG. 10 is a plan view illustrating a concept of a guideway type reel device according to one embodiment of the present disclosure.

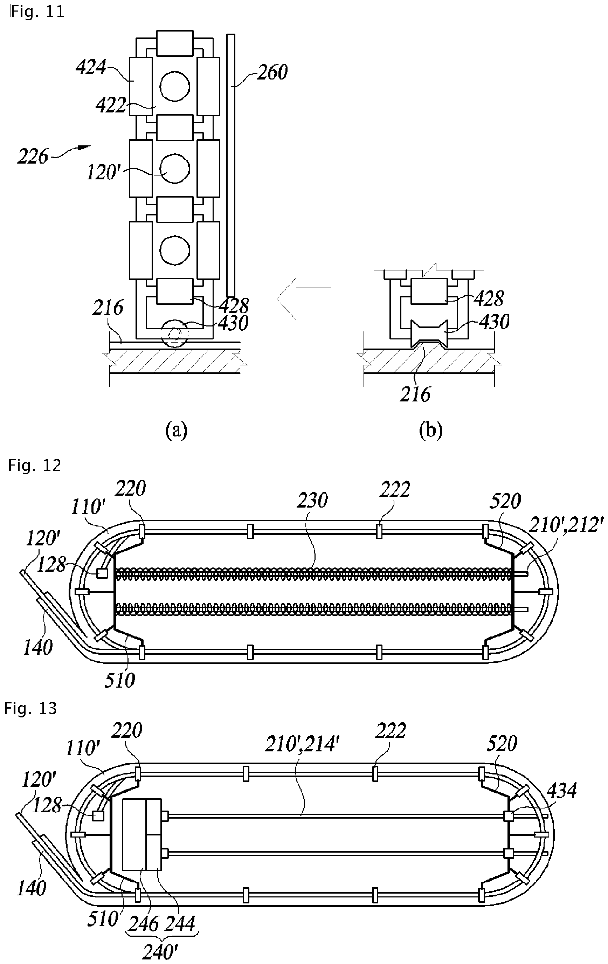

FIG. 11 is a side view illustrating concepts of a coiled leaf spring and a guide of the embodiment illustrated in FIG. 10.

Referring to FIGS. 10 and 11, in one embodiment, guide sections 210 and 216 of the cable reel may be guideways 216 formed in the winding tub 110. FIG. 11A is a side view illustrating an example in which the guideways are placed left and right, and FIG. 11B illustrates a guide wheel 430 from the side of FIG. 11A, i.e., in a longitudinal direction of the guideway. Further, the guides 220 and 226 may include the guide wheel 430 configured to move along the guideway 216. In addition, the guides 220 and 226 may further include a coiled leaf spring 260 that is disposed inside an imaginary circle formed by the plurality of guides 226, abuts some of the plurality of rollers 424 disposed in an inward direction of the imaginary circle, and is configured to push the guides 226 to the outside of a radial structure formed by the plural guideways 216.

An example in which the accommodation portions 422 for accommodating the inner cables 120' are arranged in three rows in a height direction of the winding tube 110 is illustrated in FIG. 11, but the present disclosure is not limited thereto. A structure in which the accommodation portions 422 are vertically arranged as in FIG. 11 may also be employed in another embodiment of the present disclosure.

If the plurality of accommodation portions 422 are arranged horizontally, the cable 120 wound around the innermost accommodation portion 422 should have a smaller radius of curvature than the cable 120 wound around the outermost accommodation portion 422. That is, when the plurality of accommodation portions 422 should be arranged, an imaginary radius of curvature (a radius of an imaginary circular structure formed by the plurality of guides 220 or accommodation portions 422) may be provided to be larger in the vertical arrangement than in the horizontal arrangement, which is advantageous in that, for example, in the case of the cable 120 having the same bending rigidity, the winding tube 110 can be designed to have a smaller size.

FIG. 12 is a plan view illustrating a concept of a guide shaft type of elliptical reel device according to one embodiment of the present disclosure.

FIG. 13 is a plan view illustrating a concept of a lead screw type of elliptical reel device according to one embodiment of the present disclosure.

Referring to FIGS. 12 and 13, the winding tub 110 may have a shape similar to a track of an athletic field track in which two semicircular shapes are spaced apart and elongated.

In two embodiments of FIGS. 12 and 13, the cable reel device 10 may include a winding tub 110' which includes a cable outlet 140 on one side thereof and is elongated in one direction and in which a cable 120' is stored, a plurality of guide portions 210' and 212' that are fixed in the winding tub 110' and are disposed in one direction, a plurality of guides 220 that include accommodation portions 422 configured to accommodate individual strands of the cable 120', a first guide fixing frame 510 which is configured such that the guides 220 are arranged and fixed on one semicircular circumference of the winding tub 110' and is fixed to the winding tub 110', and a second guide fixing frame 520 which is configured such that the guides 220 are arranged and fixed on the other semicircular circumference of the winding tub 110' and is configured to be moved along the guide portion 212'.

In two embodiments, the second guide fixing frame 520 moves toward the first guide fixing frame 510 when the cable 120' is withdrawn, and the second guide fixing frame 520 moves away from the first guide fixing frame 510 when the cable 120' is stored. Thereby, the cable 120' is withdrawn and stored.

Unlike the above embodiments illustrated in FIGS. 4 to 11, in these two embodiments, radii of the plurality of guides 220 arranged in semicircular shapes are not changed, and a distance between the two semicircular shapes is adjusted. Thereby, the cable 120' is withdrawn and stored.

In one of the two embodiments which is illustrated in FIG. 12, the guide portion 210' may be a guide shaft 212'. Further, the second guide fixing frame 520 may further include a slide bush 428 that is slidably coupled to the guide rod 212' and may further include a compression spring 230 that is inserted into the guide shaft 212' and is configured to push the second guide fixing frame 520 away from the first guide fixing frame 510.

Further, in one embodiment illustrated in FIG. 13, the guide portion 210' is a lead screw 214', and the second guide fixing frame 520 may further include a nut 434 that is screwed with the lead screw 214' and the reel device may further include a driving motor section 240' that is disposed close to the first guide fixing frame 510 in a direction of the second guide fixing frame 520 and is configured to rotate the lead screw 214'.

In the case of the two embodiments illustrated in FIGS. 12 and 13, a plurality of accommodation portions 422 that accommodate the inner cables 120' are preferably arranged in a direction perpendicular to the semicircular shapes of the first and second guide fixing frames 510 and 520, i.e., in a direction perpendicular to a plane on which the plurality of guides 220 are arranged.

Meanwhile, in the case of the two embodiments, movable cable guides 222 for guiding the inner cables 120' placed between the first guide fixing frame 510 and the second guide fixing frame 520 may be further provided. The movable cable guides 222 may be configured to move in conjunction with the second guide fixing frame 520 when the second guide fixing frame 520 moves toward the first guide fixing frame 510 and to be gathered to come into contact with each other between the first and second guide fixing frames 510 and 520 when the first and second guide fixing frames 510 and 520 approach each other as much as possible.

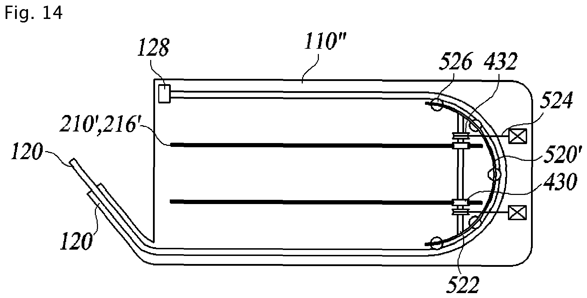

FIG. 14 is a plan view illustrating a concept of a guideway type semi-ellipsoidal reel device according to one embodiment of the present disclosure.

Referring to FIG. 14, the cable reel device shows a configuration in which a second guide fixing frame 520' is movably disposed only on one side inside a winding tub 110". In one embodiment, the case in which the type of the guideway 216' used in the embodiment illustrated in FIGS. 9 and 10 is used as the guide portion 210' is illustrated, but a guide portion type of another embodiment may be applied.

In one embodiment, the second guide fixing frame 520' includes a guide wheel 430 configured to roll on the guideway 216', and the guide wheel 430 may further include a reel-purpose roller 432 that is disposed coaxially therewith. The second guide fixing frame 520' may include a second guide shaft 522 that houses the guide wheel 430 and the reel-purpose roller 432. In one embodiment, wires 524 wound around the reel-purpose roller 432 and wire reel structures for pulling the wires 524 on one side using any power means may be included, but without being limited thereto, a person having ordinary skill in the art may pull the cables 120 inside the winding tub 110" to store the cables 120 by pulling the second guide fixing frame 520' in various ways. An example in which the second guide fixing frame 520' may be any of the above-described various types of guides 220 configured to accommodate the cables 120 and, in one embodiment, as a simpler structure, includes a plurality of V-groove rollers 526 that are rotatably disposed at the second guide fixing frame 520' is shown. In one embodiment, the cables 120 are configured to be guided and moved by five V-groove rollers 526. When the second guide fixing frame 520' moves when an unwinding or winding operation of the cable 120 occurs and comes close to the cable inlet 128, the cable 120 is withdrawn, and when the second guide fixing frame 520' moves away from the cable inlet 128, the cable 120 is stored. Thus, a length two times a distance in which the second guide fixing frame 520' can move becomes a maximum cable withdrawing length.

## Claims

1. A reel device for a charging cable comprising:
a winding tub which has a cable outlet on one side thereof and in which cables are stored;
a plurality of guide portions fixed in the winding tub and disposed in a radial shape; and
a plurality of guides coupled to the guide portions so as to be movable along the guide portions, each of the guides being an accommodating portion that accommodates at least some of the cables,
wherein an average diameter of the cables wound by the plurality of guides is reduced when the cables are withdrawn, and the average diameter of the cables wound by the plurality of guides is increased when the cables are stored, to withdraw and store the cables.

2. The reel device for a charging cable according to claim 1, wherein the guide further comprises a plurality of rollers disposed around the accommodating portion so as to guide individual strands of the cable.

3. The reel device for a charging cable according to claim 2, wherein:
the guide portion is a guide shaft;
the guide further includes a slide bush that is slidably coupled to the guide shaft; and
the reel device further comprises a compression spring that is inserted into an outer circumferential surface of the guide shaft and is configured to push the guide to an outside of the radial shape.

4. The reel device for a charging cable according to claim 2, wherein:
the guide portion is a lead screw;
the guide further includes a nut that is screwed with the lead screw; and
the reel device further comprises
a first bevel gear disposed in the center of the radial shape,
a second bevel gear coupled to one end of each of the lead screws and engaged with the first bevel gear, and
a driving motor section configured to drive the first beveled gear.

5. The for a charging cable according to claim 2, wherein:
the guide portion is a guideway formed in the winding tub;
the guide further includes a guide wheel formed to move along the guideway; and
the reel device further comprises a coiled leaf spring that is disposed inside the radial shape and is configured to come into contact with at least some of the plurality of rollers to push the guide to an outside of the radial shape.

6. The reel device for a charging cable according to any one of claims 3 to 5, wherein a plurality of accommodation portions are arranged along the guide portion.

7. The reel device for a charging cable according to any one of claims 3 to 5, wherein a plurality of accommodation portions are arranged in a direction perpendicular to a plane in which the plurality of guides are arranged.

8. A reel device for a charging cable comprising:
a winding tub which has a cable outlet on one side thereof and is elongated in one direction, and in which a cable is stored;
a plurality of guide portions fixed in the winding tub and arranged in the one direction;
a plurality of guides having accommodation portions configured to accommodate individual strands of the cable; and
a second guide fixing frame which is configured to move along the guide portions, to which the plurality of guides are fixed, and which is configured such that one end and the other end of the cable wound by the plurality of guides are placed in the same direction,
wherein the second guide fixing frame moves to one side of the winding tub when the cable is withdrawn, and the second guide fixing frame moves to the other side of the winding tub when the cable is stored, to withdraw and store the cable.

9. The reel device for a charging cable according to claim 8, wherein the guide further comprises a plurality of rollers disposed around the accommodation portions so as to guide the individual strands of the cable.

10. The reel device for a charging cable according to claim 9, wherein:
the guide portion is a guide shaft;
the second guide fixing frame further includes slide bushes that are slidably coupled to the guide shaft; and
the reel device further comprises a compression spring inserted into the guide shaft and configured to push the second guiding fixing frame to the other side.

11. The reel device for a charging cable according to claim 9, wherein:
the guide portion is a lead screw;
the second guide fixing frame further includes a nut screwed with the lead screw; and
the reel device further comprises a driving motor section disposed on the one side so as to rotate the lead screw.

12. The reel device for a charging cable according to claim 9, wherein:
the guide portion is a guideway formed in the winding tub in the one direction;
the second guide fixing frame further includes a guide wheel configured to move along the guideway; and
the reel device further comprises wire reel structures, which are configured to pull the second guiding fixing frame to the other side, on the other side.

13. The reel device for a charging cable according to any one of claim 10 and claim 12, wherein a plurality of accommodation portions are arranged in a direction perpendicular to a plane in which the plurality of guides are arranged.

14. The reel device for a charging cable according to any one of claim 10 and claim 12, further comprising a first guide fixing frame fixed to one side of the winding tube,
wherein the first guide fixing frame accommodates the plurality of guides to be fixed so that the cable is transferrable.

15. An electric vehicle charging system comprising:
the reel device for a charging cable according to any one of claim 1 and claim 8;
a support configured to place the reel devices for a charging cable in an upper space of a vehicle to be charged; and
a rotation portion configured to rotate the reel device for a charging cable such that the cable outlet is placed at a position close to a charging port of the vehicle.

16. The electric vehicle charging system according to claim 15, further comprising an extension arm structure disposed between the support and the rotation portion and configured to enable a length thereof to be adjusted,
wherein the extension arm structure comprises
a charging cable that extends from the support and is electrically connected to the cable, and
a reel device for an extension arm cable formed at one end to store or withdraw the charging cable in correspondence to a change in the length of the extension arm structure,
wherein the reel device for an extension arm cable is formed in the same structure as the reel devices for a charging cable.
